# EUROPÄISCHE PATENTSCHRIFT

(11) **EP 1 855 782 B1**
(45) Veröffentlichungstag und Bekanntmachung des Hinweises auf die Patenterteilung: **23.01.2019**
(21) Anmeldenummer: 06707096.1
(22) Anmeldetag: 20.02.2006
(51) Int. Cl.: B01D 47/02, B01D 47/14, B23K 3/08

(54) **REFLOW-LÖTANLAGE MIT VORRICHTUNG UND VERFAHREN ZUR REINIGUNG EINES PROZESSGASES**
REFLOW SOLDERING SYSTEM WITH DEVICE AND METHOD FOR PURIFYING A PROCESS GAS
INSTALLATION DE SOUDAGE AVEC DISPOSITIF ET PROCEDE DE PURIFICATION D'UN GAZ GENERE DANS L'INSTALLATION

(30) Priorität: 07.03.2005 DE 102005010378
(43) Veröffentlichungstag der Anmeldung: 21.11.2007
(73) Patentinhaber: Rehm Thermal Systems GmbH, 89143 Blaubeuren-Seissen (DE)
(72) Erfinder: BELL, Hans, 13187 Berlin (DE); FELGNER, Jürgen, 86199 Augsburg (DE); HEIDENREICH, Ralf, 01277 Dresden (DE)
(74) Vertreter: Grünecker Patent- und Rechtsanwälte PartG mbB
(86) Internationale Anmeldenummer: PCT/EP2006/001516
(87) Internationale Veröffentlichungsnummer: WO 2006/094621

(56) Entgegenhaltungen:
- EP-A- 0 689 873
- DE-A1- 2 061 944
- US-A- 3 789 109
- US-A- 4 460 552
- US-A- 4 533 367
- US-A- 4 850 117
- US-A- 6 019 818
- US-B1- 6 391 093
- US-B1- 6 759 018

## Beschreibung

Die vorliegende Erfindung bezieht sich allgemein auf das Reflow-Löten, insbesondere auf die Reinigung von Prozessgasen in Reflow-Lötanlagen.
Zum Befestigen elektronischer Bauteile auf einer Leiterplatte wird oft das Reflow-Löten verwendet. Beim Reflow-Löten wird zunächst Lot auf die Kontaktflecken einer Leiterplatte aufgebracht. Danach wird die Leiterplatte mit den Bauteilen bestückt und das Lot wird durch Erhitzen geschmolzen. Wenn das Lot wieder erstarrt, werden die Bauteile fest mit der Leiterplatte verbunden.
Beim Erhitzen des Lots entstehen Sublimations- und Verdampfungsprodukte (nachfolgend als Abprodukte bezeichnet), die zunächst in gasförmigem Zustand oder in Form kleiner Flüssigkeitströpfchen oder Rauch vorliegen und in das Prozessgasvolumen der Lötanlage eingehen. Werden die Abprodukte nicht aus der Lötanlage entfernt, können sie an Teilen der Anlage mit niedriger Temperatur kondensieren bzw. resublimieren oder sich in der Lötanlage ablagern. Dies führt zu einer Verunreinigung der Lötanlage.
Es ist Stand der Technik, eine Reflow-Lötanlage mit einer Kühlvorrichtung auszustatten. Ein Gasstrom aus der Lötanlage wird in die Kühlvorrichtung geleitet, um die Verunreinigungen dort zu kondensieren. Danach wird das Prozessgas aus der Kühlvorrichtung in die Lötanlage zurückgeleitet. Eine solche Vorrichtung wird beispielsweise in der Druckschrift DE 10301102 B3 beschrieben.

Ein weiteres Konzept ist in der Druckschrift US 6 759 018 B1 beschrieben, bei dem Abgase aus der Halbleiterherstellung über eine befeuchtete Schüttung von Füllkörpern geleitet werden, und vor Eintritt in die Schüttung ggfs. gekühlt werden können. Bei der Reinigung des Prozessgases einer Reflow-Lötanlage mit Hilfe einer Kühlvorrichtung tritt jedoch das Problem auf, dass die Temperatur, bei der die Verunreinigungen kondensieren oder resublimieren, von den Materialien, die in der Leiterplatte und den Bauteilen verwendet werden, und von der Zusammensetzung des Lots und der beim Löten verwendeten Flussmittel abhängt. Es ist im Allgemeinen nicht vorhersagbar, wieweit das Prozessgas gekühlt werden muss, um die Abprodukte im Wesentlichen zu entfernen. Dadurch werden die Konstruktion und der Betrieb der Kühlvorrichtung erschwert. Außerdem ist es notwendig, die Kühlvorrichtung regelmäßig zu reinigen, um die darin abgelagerten Abprodukte zu entfernen. Dies kann mit einem erheblichen Wartungsaufwand verbunden sein, durch den die Betriebskosten der Lötanlage erhöht werden.
Des Weiteren ist es Stand der Technik, das Prozessgas durch einen Filter zu leiten. Der Filter ist dafür ausgelegt, die Abprodukte zurückzuhalten. Der Filter hat jedoch nur eine begrenzte Aufnahmekapazität. Wenn diese erschöpft ist, muss er ausgewechselt oder gereinigt werden. Dabei tritt das Problem auf, dass der Filterwechsel bzw. die Reinigung des Filters mit einem erheblichen Wartungsaufwand verbunden sein kann. Außerdem sind die Filter oft wenig effektiv, oder die Standzeiten sehr gering.
Eine mögliche Lösung ist auch, das Prozessgas aus der Lötanlage mit einer Reinigungsflüssigkeit in Kontakt zu bringen. Die Reinigungsflüssigkeit soll die Abprodukte aufnehmen und so aus dem Prozessgas entfernen. Bekannt ist dabei, das Prozessgas in Form von Blasen durch die Reinigungsflüssigkeit zu leiten, an einer Abscheidewand, an der die Reinigungsflüssigkeit entlangströmt, vorbeizuleiten, oder das Prozessgas durch einen Raum, in den die Reinigungsflüssigkeit gesprüht wird, zu leiten. Reinigungsvorrichtungen, die nach diesem Prinzip arbeiten, werden beispielsweise in der Druckschrift DE 10246540 A1 beschrieben.
Ein Problem, das bei den bekannten Reinigungsvorrichtungen, in denen eine Reinigungsflüssigkeit verwendet wird, auftritt ist, dass Tröpfchen der Reinigungsflüssigkeit durch die Strömung des Prozessgases mitgerissen werden und in die Lötanlage eindringen können. Dadurch kann die Lötanlage verunreinigt werden. Außerdem kann es schwierig sein, sicherzustellen, dass die Abprodukte tatsächlich von der Reinigungsflüssigkeit aufgenommen werden.
Es ist demgemäss eine Aufgabe der vorliegenden Erfindung, eine Vorrichtung und ein Verfahren zur Reinigung eines Prozessgases einer Reflow-Lötanlage bereitzustellen, mit denen Abprodukte zuverlässig aus dem Prozessgas entfernt werden können und mit denen der Aufwand für Wartung und Instandhaltung der Lötanlage verringert werden kann.

Diese Aufgabe wird durch den Gegenstand der Ansprüche 1 und 10 gelöst.
Die Füllkörper stellen eine Oberfläche bereit, an der sich Abprodukte des Lötvorgangs in der Reflow-Lötanlage und/oder Tröpfchen des flüssigen Fluids ablagern können. Dadurch können die Abbauprodukte und/oder die Tröpfchen des Fluids aus dem Prozessgas, das durch die Schüttung von Füllkörpern strömt, entfernt werden. So können Verunreinigungen der Lötanlage vermieden werden. Das flüssige Fluid kann einfach ausgetauscht werden, wodurch der zum Betrieb der Lötanlage erforderliche Aufwand für Wartung und Instandhaltung reduziert werden kann.

Geeigneterweise ist die Gaszufuhr dafür ausgelegt, das Prozessgas durch das Volumen zu leiten. Dadurch kann das Prozessgas während des Betriebs der Vorrichtung durch das Fluid strömen, wodurch ein besonders intensiver Kontakt zwischen dem Prozessgas und dem Fluid hergestellt wird.

In weiterer vorteilhafter Ausgestaltung der Erfindung umfasst die Vorrichtung zur Reinigung des Prozessgases zusätzlich mindestens einen Kolonnenboden, auf dem sich die mindestens eine Schüttung von Füllkörpern befindet. Dadurch kann die Schüttung von Füllkörpern auf eine zum Durchströmen mit dem Prozessgas besonders günstige Weise angeordnet werden.

Vorteilhafterweise umfasst die Vorrichtung zur Reinigung eines Prozessgases einer Reflow-Lötanlage mehrere übereinander angeordnete Kolonnenböden, auf denen sich jeweils eine Schüttung von Füllkörpern befindet. So kann das Prozessgas nacheinander durch die Kolonnenböden und die Schüttungen von Füllkörpern strömen, wodurch eine gründliche Reinigung des Prozessgases erreicht werden kann.

Geeigneterweise umfasst die Einrichtung zum Zuführen des Fluids mindestens eine Sprühdüse und/oder mindestens einen Tropfenspender. Dadurch kann eine gleichmäßige Befeuchtung der Schüttung von Füllkörpern erreicht werden.

Vorteilhafterweise umfasst die Vorrichtung zur Reinigung eines Prozessgases einer Reflow-Lötanlage zusätzlich einen Auffangbehälter für das Fluid. Dieser ermöglicht es, Fluid, das durch die Schüttung von Füllkörpern hindurchgesickert ist, einfach aus der Vorrichtung zu entfernen.

In weiterer vorteilhafter Ausgestaltung der Erfindung nimmt die mindestens eine Schüttung von Füllkörpern mindestens die Hälfte des Rauminhalts des Behälters ein. Durch die große Menge von Füllkörpern kann eine intensive Reinigung des Prozessgases erreicht werden.

Vorteilhafterweise umfasst die Vorrichtung zur Reinigung eines Prozessgases zusätzlich eine Abscheidevorrichtung. Diese ermöglicht es, Tröpfchen und/oder Dämpfe des Fluids sowie Reste der Abprodukte, die nicht vom flüssigen Fluid aufgenommen wurden, aus dem Prozessgas zu entfernen.

Geeigneterweise umfasst die Abscheidevorrichtung einen zyklonartigen Behälter, der beispielsweise in Trichterform ausgebildet ist, mit einem zum Durchströmen mit einem Kühlmittel geeigneten Mantel. Ein Gaseintritt ist dafür ausgelegt, das Prozessgas tangential zu einem Umfang des zyklonartigen Behälters an einem oberen Ende des zyklonartigen Behälters einzuleiten. Ein im wesentlichen vertikaler Gasaustritt ist am oberen Ende des zyklonartigen Behälters in dessen Mitte angeordnet. Durch zentrische Absaugung und die tangentiale Einleitung wird im Inneren des Behälters ein Wirbel induziert. Durch die Zentrifugalkraft werden Feststoffpartikel und Flüssigkeitströpfchen an die Wand des zyklonartigen Behälters gedrückt. An der gekühlten Wand kondensieren Stoffe, die im Prozessgas enthalten sind. Die Kondensate sowie die Feststoffpartikel und Flüssigkeitströpfchen laufen an der Wand des zyklonartigen Behälters nach unten. Dadurch wird eine effektive Reinigung des Prozessgases erreicht.

In weiterer vorteilhafter Ausgestaltung der Erfindung umfasst die Abscheidevorrichtung einen Elektrofilter und/oder einen mechanischen Filter. Damit können feste Partikel wirksam aus dem Prozessgas entfernt werden.

Geeigneterweise umfassen die Füllkörper ein Metall, ein Glas oder ein keramisches Material. Dadurch sind die Füllkörper lange haltbar.

Die Erfindung soll nun anhand von Ausführungsbeispielen und den beiliegenden Zeichnungen, die sich auf diese Ausführungsbeispiele beziehen, näher erläutert werden. Es zeigen:
Fig. 1 eine schematische Querschnittsansicht einer Vorrichtung zur Reinigung eines Prozessgases einer Reflow-Lötanlage zum besseren Verständnis der vorliegenden Erfindung; und
Fig. 2 eine schematische Querschnittsansicht eines Agglomerators in einer Vorrichtung zur Reinigung eines Prozessgases einer Reflow-Lötanlage gemäß einer Ausführungsform der vorliegenden Erfindung.

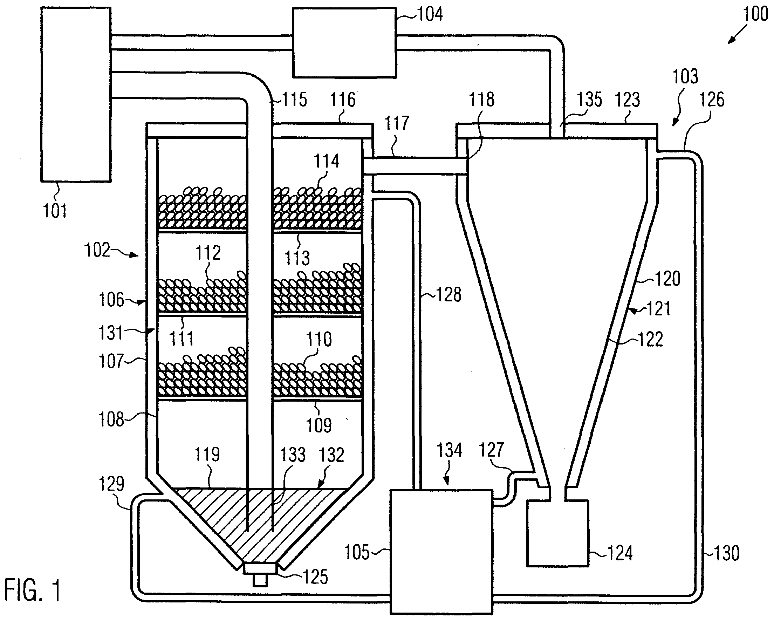

Ein erläuterndes Beispiel zum besseren Verständnis der vorliegenden Erfindung wird nun anhand der Fig. 1 erläutert.

Fig. 1 zeigt eine schematische Querschnittsansicht einer Vorrichtung 100 zur Reinigung eines Prozessgases einer Reflow-Lötanlage gemäß einer Ausführungsform der vorliegenden Erfindung.

Die Vorrichtung 100 umfasst eine Gaswäscher-Kolonne 102. Eine Gaszufuhr 115 der Gaswäscher-Kolonne 102 ist mit einer Reflow-Lötanlage 101 verbunden. Die Gaszufuhr 115 ist als ein Rohr ausgebildet, das in im wesentlichen vertikaler Richtung in einen Behälter 106 hinein und ungefähr in dessen Mitte durch diesen hindurch verläuft. Ein Prozessgas der Lötanlage 100 kann durch die Gaszufuhr 115 in den Behälter 106 strömen. Der Behälter 106 ist während des Betriebs der Vorrichtung 100 durch einen Deckel 116 geschlossen, der zu Wartungsarbeiten an der Gaswäscher-Kolonne 102 abgenommen werden kann. Dadurch wird ein Zugang zum Inneren des Behälters 106 ermöglicht.

Ein Volumen 132 im unteren Teil des Behälters 106 ist dafür ausgelegt, ein flüssiges Fluid 119 aufzunehmen, das zur Reinigung des Prozessgases von den Abprodukten dient. Im Volumen 132 kann so ein Bad des flüssigen Fluids 119 bereitgestellt werden. Das Fluid 119 kann beispielsweise modifizierten Alkohol, Akoxylate und Polyglykole enthalten (wie z.B. der Fluxgaswäscher VP1465 der Firma Kolb Reinigungstechnik). Das Volumen 132 kann beispielsweise in Form eines im wesentlichen kegelförmigen Hohlraums ausgebildet sein. An einem unteren Teil des Volumens 132 ist eine Einrichtung 125 zum Zuführen des Fluids 119 zu dem Behälter 106 vorgesehen. Die Einrichtung 125 kann beispielsweise einen Anschluss, der zum Anschließen einer Leitung für das Fluid geeignet ist und einen Hahn, mit dem eine Verbindung zwischen dem Volumen 132 und dem Anschluss geöffnet und geschlossen werden kann, umfassen.

Die Gaszufuhr 115 ist dafür ausgelegt, das Prozessgas der Reflow-Lötanlage 100 dem Volumen 132 zuzuführen und dadurch in das Bad des Fluids 119 einzuleiten. Zu diesem Zweck kann sich eine Öffnung 133 der Gaszufuhr unterhalb eines beim Betrieb der Vorrichtung 100 vorgesehenen Spiegels des flüssigen Fluids 119 befinden.

Im oberen Teil des Behälters 106 sind übereinander Kolonnenböden 109, 111, 113 angeordnet. Auf dem Kolonnenboden 109 befindet sich eine Schüttung 110 von Füllkörpern. Entsprechend befinden sich auch auf den Kolonnenböden 111, 113 Schüttungen 112, 114 von Füllkörpern.

Die Kolonnenböden 109, 111, 113 können beispielsweise jeweils ein Gitter oder eine Platte mit Löchern umfassen. Eine Größe der Öffnungen zwischen den Stäben des Gitters bzw. der Löcher in der Platte ist geeigneterweise so ausgelegt, dass die Füllkörper nicht durch die Kolonnenböden 109, 111, 113 fallen können. Das Prozessgas der Reflow-Lötanlage 101 kann jedoch durch die Kolonnenböden 109, 111, 113 und die Schüttungen 110, 112, 114 von Füllkörpern hindurchströmen.

Die Füllkörper können ein Material, das dafür ausgelegt ist, von dem Prozessgas und dem Fluid 119 nicht angegriffen zu werden, umfassen. Beispielsweise könne sie ein Metall wie etwa Edelstahl, ein Glas oder ein keramisches Material enthalten. Sie können eine längliche Form, beispielsweise eine ungefähr zylindrische, quaderförmige oder ellipsoidförmige Gestalt haben. In einer speziellen Ausführungsform der vorliegenden Erfindung haben die Füllkörper eine Länge von ungefähr 3 cm und einen Durchmesser von ungefähr 1 cm. Die Füllkörper können Poren und/oder Unebenheiten auf ihrer Oberfläche aufweisen. Vorteilhafterweise wird dadurch eine Oberfläche der Füllkörper vergrößert.

Der Behälter 106 muss nicht drei Kolonnenböden und drei Schüttungen von Füllkörpern enthalten. Der Behälter 106 umfasst einen einzigen, zwei, oder vier oder mehr Kolonnenböden, auf denen sich jeweils eine Schüttung von Füllkörpern befindet.

Oberhalb der Kolonnenböden 109, 111, 113 und der auf diesen angeordneten Schüttungen 110, 112, 114 von Füllkörpern befindet sich ein Gasauslass 117, durch den das Prozessgas, nachdem es von der Gaszufuhr 115 durch das Volumen 132 und die Schüttungen 110, 112, 114 geströmt ist, den Behälter 106 verlassen kann.

Des weiteren umfasst die Vorrichtung 100 eine Kühlvorrichtung 134. Die Kühlvorrichtung 134 enthält eine Anlage 105 zum Bereitstellen eines Kühlmittels. Die Anlage 105 ist durch Rohre 128, 129 mit einem Mantel 131 des Behälters 106 verbunden. Der Mantel 131 umfasst eine äußere Wand 107 und eine innere Wand 108 des Behälters 106. Das Kühlmittel kann durch das Rohr 128 in einen Raum zwischen der äußeren Wand 107 und der inneren Wand 108 fließen, diesen durch das Rohr 129 verlassen und anschließend zu der Anlage 134 zurückströmen. Während sich das Kühlmittel im Raum zwischen den Wänden 107, 108 befindet, kann ein Wärmeaustausch zwischen dem Kühlmittel und dem flüssigen Fluid 119 und/oder dem Prozessgas stattfinden, durch den die Temperatur des Fluids 119 bzw. des Prozessgases erniedrigt wird. Geeigneterweise ist die Kühlvorrichtung 134 dafür ausgelegt, eine Temperatur des Fluids und/oder des Prozessgases in einem Bereich von ungefähr 80 ° C bis ungefähr 100 °C zu halten. Das Kühlmittel kann beispielsweise Wasser enthalten.

Beim Betrieb der Vorrichtung 100 wird das Prozessgas der Reflow-Lötanlage 101 durch die Gaszufuhr 115 in das Volumen 132, das mit dem Fluid 119 gefüllt ist, geleitet. Eine Menge des Fluids 119 im Volumen 132 kann über die Einrichtung 125 zum Zuführen des Fluids so eingestellt werden, dass sich die Öffnung 133 der Gaszufuhr 115 unterhalb des Spiegels des Fluids 119 befindet. Das Prozessgas strömt dann in Form von Blasen durch das Fluid 119 hindurch. An den Wänden der Blasen können Abprodukte des Lötvorgangs in der Reflow-Lötanlage 101 aus dem Prozessgas in das Fluid 119 übergehen. Dadurch können die Abprodukte zumindest teilweise aus dem Prozessgas entfernt werden.

Nachdem das Prozessgas das Volumen 132 mit dem Fluid 119 durchströmt hat, fließt es im Inneren des Behälters nach oben auf den Gasauslass 117 zu. Dabei durchströmt es nacheinander die Kolonnenböden 109, 111, 113 und die darauf angeordneten Schüttungen 110, 112, 114 von Füllkörpern.

Beim Durchströmen der Schüttungen 110, 112, 114 kommt das Prozessgas mit der Oberfläche der Füllkörper in Kontakt. Tröpfchen des Fluids 119, die von dem Prozessgas beim Durchströmen des Fluids 119 mitgerissen wurden, können sich dabei an der Oberfläche der Füllkörper ablagern. Dämpfe des Fluids 119 können an den Füllkörpern kondensieren und dadurch aus dem Prozessgas entfernt werden. Auch Reste der Abprodukte des Lötvorgangs können sich auf den Füllkörpern ablagern. Diese Vorgänge, durch die das Prozessgas weiter gereinigt wird, können besonders gefördert werden, wenn die Gesamtheit der Füllkörper in den Schüttungen eine große Oberfläche hat. Dies kann beispielsweise durch Bereitstellen einer großen Anzahl von Füllkörpern pro Schüttung, durch Vorsehen mehrerer Kolonnenböden mit jeweils einer Schüttung von Füllkörpern und/oder durch Vergrößern der Oberfläche der einzelnen Füllkörper, etwa durch Strukturen auf der Oberfläche der Füllkörper und/oder durch Poren, erreicht werden.

Der Gasauslass 117 kann dafür ausgelegt sein, das Prozessgas nach dem Verlassen des Behälters 106 einer Abscheidevorrichtung 103 zuzuführen. Die Abscheidevorrichtung 103 umfasst einen zyklonartigen Behälter 121, der beispielsweise, wie in Fig. 1 gezeigt, trichterförmig ausgebildet ist. Der Innenraum des Behälters 121 hat an einem oberen Ende einen weiteren Radius als an einem unteren Ende. Der zyklonartige Behälter 121 weist eine äußere Wand 120 und eine innere Wand 122 auf. Die äußere Wand 120 und die innere Wand 122 bilden zusammen einen Mantel des zyklonartigen Behälters 121. Durch eine Kühlmittelzufuhr 126 kann über ein Rohr 130 Kühlmittel von der Anlage 105 in den Raum zwischen den Wänden 120, 122 geleitet werden. Durch einen Kühlmittelauslass 127 kann das Kühlmittel den Mantel verlassen und zu der Anlage 105 zurückströmen.

Der Mantel des zyklonartigen Behälters 121 muss nicht mit der gleichen Anlage 105 zum Bereitstellen eines Kühlmittels verbunden sein wie der Mantel 131 des Behälters 106. Für die Gaswäscher-Kolonne 102 und die Abscheidevorrichtung 103 können getrennte Kühlmittelversorgungen bereitgestellt werden.

Während die Abscheidevorrichtung 103 in Betrieb ist, ist eine Öffnung am oberen Ende des zyklonartigen Behälters 121 von einem Deckel 123 verschlossen. Der Deckel 123 kann geöffnet werden, um Wartungsarbeiten an der Abscheidevorrichtung 103 vorzunehmen.

Die Abscheidevorrichtung 103 weist einen Gaseintritt 118 auf. Dieser ist dafür ausgelegt, das Prozessgas tangential zu einem Umfang des zyklonartigen Behälters am oberen Ende des zyklonartigen Behälters 121 in diesen einzuleiten. Zu diesem Zweck kann der Gaseintritt 118 ein Rohr, das im Inneren des zyklonartigen Behälters ein Stück weit parallel zu dessen Umfang verläuft, umfassen.

Am oberen Ende des zyklonartigen Behälters 121 ist in dessen Mitte ein Gasaustritt 135 angebracht. Dieser verläuft im wesentlichen vertikal durch den Deckel 123 hindurch. Am unteren Ende des zyklonartigen Behälters 121 befindet sich ein Auffangbehälter 124.

Beim Betrieb der Vorrichtung 100 strömt das Prozessgas durch den Gaseintritt 103 in den zyklonartigen Behälter 121, und zwar tangential zu dessen Umfang. Dadurch entsteht eine Drehbewegung des Prozessgases im Inneren des Behälters 121. Feste Partikel und/oder Flüssigkeitströpfchen im Prozessgas sind durch die Drehbewegung einer Zentrifugalkraft ausgesetzt und werden gegen die Wand 122 des zyklonartigen Behälters 121 gedrückt. Sie bewegen sich entlang der Wand 122 nach unten und fallen schließlich in den Auffangbehälter 124. Gasförmige Abprodukte des Lötvorgangs und Dämpfe des Fluids 119 können an der gekühlten Wand 122 kondensieren und anschließend ebenfalls nach unten in den Auffangbehälter 124 ablaufen.

Damit die abgeschiedenen Stoffe besonders leicht in den Auffangbehälter 124 ablaufen, kann die Wand 122 an der Innenseite des zyklonartigen Behälters 121 eine Antihaftschicht aufweisen. Die Antihaftschicht kann beispielsweise Perfluoralkoxy (PFA) oder Teflon enthalten.

Das Prozessgas strömt durch den Gasaustritt 135 nach oben aus dem zyklonartigen Behälter 121. Anschließend kann das Prozessgas durch eine Filtervorrichtung 104 weiter gereinigt werden, bevor es wieder der Reflow-Lötanlage 101 zugeführt wird. Die Filtervorrichtung 104 kann beispielsweise einen den Fachleuten bekannten mechanischen Filter und/oder einen Elektrofilter umfassen.

Die Vorrichtung 100 zur Reinigung eines Prozessgases einer Reflow-Lötanlage muss keine Filtervorrichtung 104 aufweisen. Das Prozessgas wird, nachdem es die Abscheidevorrichtung 103 verlassen hat, gleich zu der Reflow-Lötanlage 101 zurückgeführt. Die Vorrichtung 100 umfasst keine Abscheidevorrichtung 103. Dabei kann das Prozessgas nach Verlassen der Gaswäscher-Kolonne 102 der Filtervorrichtung 104 zugeführt werden. Alternativ kann das Prozessgas vom Gasauslass 117 der Gaswäscher-Kolonne 102 direkt zur Reflow-Lötanlage 101 zurückgeführt werden. In diesem Fall kann die Filtervorrichtung 104 weggelassen werden.

Neben den oben beschriebenen Strukturelementen kann die Vorrichtung 100 Pumpen zum Transport des Reinigungsmittels 119 und/oder des Kühlmittels umfassen. Diese sind in der Fig. 1 der Übersichtlichkeit halber nicht gezeigt.

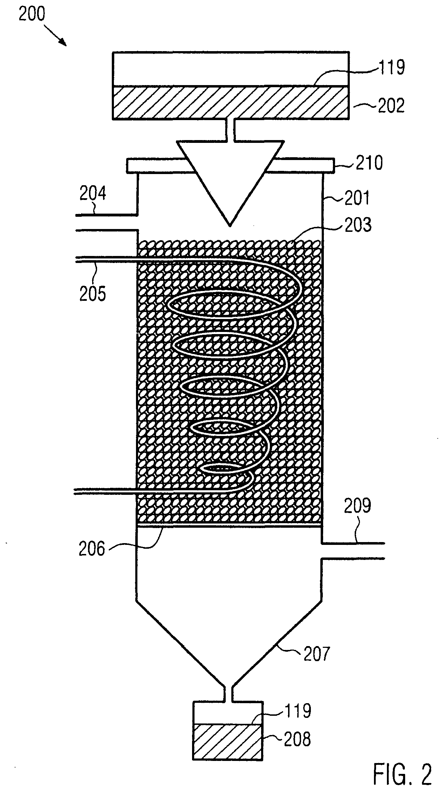

Fig. 2 zeigt eine schematische Querschnittsansicht eines Agglomerators 200 gemäß der vorliegenden Erfindung.. In der Ausführungsform der vorliegenden Erfindung kann der Agglomerator 200 die Gaswäscher-Kolonne 102 in der in Fig. 1 gezeigten Vorrichtung 100 zur Reinigung eines Prozessgases einer Reflow-Lötanlage ersetzen.

Der Agglomerator 200 umfasst einen Behälter 201. Der Behälter 201 kann einen Deckel 210 umfassen. Dieser ist während des Betriebs der Vorrichtung 100 geschlossen und kann bei Wartungs- und Instandhaltungsarbeiten geöffnet werden, um einen einfachen Zugang zum Inneren des Behälters 201 zu ermöglichen. Eine Gaszufuhr 204 ist dafür ausgelegt, das Prozessgas von der Reflow-Lötanlage 101 dem Behälter 201 zuzuführen. Im Inneren des Behälters 201 ist ein Kolonnenboden 206 angebracht, auf dem sich eine Schüttung 203 von Füllkörpern befindet.

Außerdem enthält der Behälter 201 einen Kühler 205. Der Kühler ist dafür geeignet, von einem Kühlmittel durchströmt zu werden und kann beispielsweise in Form eines Rohrs aus einem Material hoher Wärmeleitfähigkeit, beispielsweise Kupfer oder Aluminium, das durch die Schüttung 203 von Füllkörpern verläuft, bereitgestellt werden. Der Kühler kann ein oder mehrere hohle Platten aus wärmeleitfähigem Material, die dafür ausgelegt sind, vom Kühlmittel durchströmt zu werden, umfassen.

Gemäß der Erfindung kann der Behälter 201 anstelle des Kühlers 201 oder zusätzlich zu diesem einen zum Durchströmen mit einem Kühlmittel geeigneten Mantel ähnlich dem Mantel 131 der Gaswäscher-Kolonne 102 (Fig. 1) aufweisen.

Der Agglomerator 200 muss nicht, wie in Figur 2 gezeigt, eine einzige Schüttung von Füllkörpern umfassen. Gemäß der vorliegenden Erfindung kann der Agglomerator zwei oder mehr Schüttungen von Füllkörpern enthalten. Somit enthält der Agglomerator 200 mindestens eine Schüttung von Füllkörpern. In manchen Ausführungsformen kann die mindestens eine Schüttung von Füllkörpern die Hälfte oder mehr als die Hälfte eines Rauminhalts des Behälters 201 einnehmen.

Unterhalb des Kolonnenbodens 206 ist ein Gasauslass 209 angebracht. Prozessgas, das durch die Gaszufuhr 204 in den Behälter 201 hinein und durch die Schüttung 203 von Füllkörpern hindurch geströmt ist, kann den Behälter 201 durch den Gasauslass 209 verlassen.

Der Agglomerator 200 enthält ferner eine Einrichtung zum Zuführen eines flüssigen Fluids 119. Diese ist mit einem Tank 202 für das Fluid 119 verbunden. Die Einrichtung kann beispielsweise eine Sprühvorrichtung und/oder einen Tropfenspender umfassen. Am unteren Ende des Behälters 201 befindet sich ein Auffangbehälter 208, in den das Fluid 119 fließen kann, nachdem es durch die Schüttung 203 von Füllkörpern und den Kolonnenboden 206 gesickert ist. Um das Abfließen des Fluids 119 zu erleichtern, kann der Behälter 201 an seinem unteren Ende einen zyklonartigen Bereich 207, an dessen Spitze der Auffangbehälter 208 angebracht ist, aufweisen.

Beim Betrieb der Vorrichtung 100 zur Reinigung eines Prozessgases einer Reflow-Lötanlage wird das flüssige Fluid 119 über die Einrichtung 204 auf die Schüttung 203 von Füllkörpern gebracht. Dadurch werden die Füllkörper mit dem Fluid 119 befeuchtet. Das Prozessgas wird von der Lötanlage 101 durch die Gaszufuhr 204 in den Behälter 201 geleitet und durchströmt die Schüttung 203 von Füllkörpern. Dabei kommt das Prozessgas mit dem Fluid 119 in Kontakt. Abprodukte des Lötvorgangs in der Lötanlage 101 können so vom Fluid 119 aufgenommen werden. Eine Betriebstemperatur des Agglomerators 200 kann durch Kühlung in einem Bereich von ungefähr 80 °C bis ungefähr 100 °C gehalten werden.

Anschließend strömt das Prozessgas durch den Gasauslass 209 aus dem Behälter 201 und kann der Abscheidevorrichtung 117, der Filtervorrichtung 104 oder der Reflow-Lötanlage 101 zugeführt werden.

## Patentansprüche

1. Reflow-Lötanlage mit einer Reinigungsvorrichtung für ein verunreinigtes Prozessgas mit:
einem Behälter, der mindestens eine Schüttung von Füllkörpern enthält;
einer Gaszufuhr, die dafür ausgelegt ist, das Prozessgas von oben dem Behälter zuzuführen und die befeuchtete Schüttung von Füllkörpern zu durchströmen;
einem Gasauslass, der dafür ausgelegt ist, das Prozessgas nach einem Durchströmen der mindestens einen Schüttung von Füllkörpern aus dem Behälter abzuführen;
einer Einrichtung zum Zuführen eines flüssigen Fluids von oben auf die Schüttung von Füllkörpern, und
einer Kühlvorrichtung, die einen zum Durchströmen mit einem Kühlmittel geeigneten Mantel des Behälters oder einen geeigneten Kühler im Inneren des Behälters umfasst.

2. Reflow-Lötanlage mit einer Reinigungsvorrichtung für ein verunreinigtes Prozessgas nach Anspruch 1, die zusätzlich einen Kolonnenboden, auf dem sich die mindestens eine Schüttung von Füllkörpern befindet, umfasst.

3. Reflow-Lötanlage mit einer Reinigungsvorrichtung für ein mit Flussmittel verunreinigtes Prozessgas nach Anspruch 1, in der die Einrichtung zum Zuführen des Fluids mindestens eine Sprühdüse und/oder mindestens einen Tropfenspender umfasst.

4. Reflow-Lötanlage mit einer Reinigungsvorrichtung für ein verunreinigtes Prozessgas nach einem der Ansprüche 1 und 3, die zusätzlich einen Auffangbehälter für das Fluid umfasst.

5. Reflow-Lötanlage mit einer Reinigungsvorrichtung für ein verunreinigtes Prozessgas nach einem der Ansprüche 1 bis 4, in der die mindestens eine Schüttung von Füllkörpern mindestens die Hälfte eines Rauminhalts des Behälters einnimmt.

6. Reflow-Lötanlage mit einer Reinigungsvorrichtung für ein verunreinigtes Prozessgas nach einem der vorhergehenden Ansprüche, die zusätzlich eine Abscheidevorrichtung umfasst.

7. Reflow-Lötanlage mit einer Reinigungsvorrichtung für ein verunreinigtes Prozessgas nach Anspruch 6, in der die Abscheidevorrichtung umfasst:
einen zyklonartigen Behälter mit einem zum Durchströmen mit einem Kühlmittel geeigneten Mantel;
einen Gaseintritt, der dafür ausgelegt ist, das Prozessgas tangential zu einem Umfang des zyklonartigen Behälters an einem oberen Ende des zyklonartigen Behälters einzuleiten; und
einen im wesentlichen vertikalen, am oberen Ende des zyklonartigen Behälters in dessen Mitte angeordneten Gasaustritt.

8. Reflow-Lötanlage mit einer Reinigungsvorrichtung für ein verunreinigtes Prozessgas nach Anspruch 6 oder 7, in der die Abscheidevorrichtung einen Elektrofilter und/oder einen mechanischen Filter umfasst.

9. Reflow-Lötanlage mit einer Reinigungsvorrichtung für ein verunreinigtes Prozessgas nach Anspruch 1, in der die von oben durch ein flüssiges Fluid befeuchteten Füllkörper, die von einem von oben zugeführten Prozessgas durchströmt werden, ein Metall, ein Glas oder ein keramisches Material umfassen.

10. Verfahren zur Reinigung eines Prozessgases einer Reflow-Lötanlage, bei dem:
ein flüssiges Fluid über eine Einrichtung auf mindestens eine Schüttung von Füllkörpern in einem Behälter gebracht wird, wodurch die Füllkörper mit dem Fluid befeuchtet werden;
ein von oben zugeführtes Prozessgas durch mindestens eine befeuchtete Schüttung von Füllkörpern geleitet wird, wodurch das Prozessgas mit dem flüssigen Fluid in Kontakt gebracht wird, und
ein geeigneter Mantel des Behälters oder ein geeigneter Kühler im Inneren des Behälters mit Kühlmittel durchströmt wird, und die mindestens eine Schüttung von Füllkörpern gekühlt wird.

11. Verfahren zur Reinigung eines Prozessgases einer Reflow-Lötanlage nach Anspruch 10, bei dem des Prozessgas nach Durchströmen des mit dem Fluid gefüllten Volumens durch einen Kolonnenboden, auf dem sich die mindestens eine Schüttung von Füllkörpern befindet, geleitet wird.

12. Verfahren zur Reinigung eines Prozessgases einer Reflow-Lötanlage nach Anspruch 10, bei dem die mindestens eine Schüttung von Füllkörpern mit dem Fluid befeuchtet wird, indem das Fluid auf die mindestens eine Schüttung von Füllkörpern gesprüht oder getropft wird.

13. Verfahren zur Reinigung eines Prozessgases einer Reflow-Lötanlage nach einem der Ansprüche 10 bis 12, bei dem zusätzlich das Fluid gekühlt wird.

14. Verfahren zur Reinigung eines Prozessgases einer Reflow-Lötanlage nach einem der Ansprüche 10 bis 13, bei dem das Prozessgas, nachdem es durch die mindestens eine Schüttung von Füllkörpern geleitet wurde, in eine Abscheidevorrichtung geleitet wird.

15. Verfahren zur Reinigung eines Prozessgases einer Reflow-Lötanlage nach Anspruch 14, bei dem die Abscheidevorrichtung einen gekühlten zyklonartigen Behälter umfasst, das Prozessgas tangential zu einem Umfang des zyklonartigen Behälters an einem oberen Ende des zyklonartigen Behälters in diesen geleitet wird und das Prozessgas am oberen Ende in der Mitte aus dem zyklonartigen Behälter geleitet wird.

16. Verfahren zur Reinigung eines Prozessgases einer Reflow-Lötanlage nach einem der Ansprüche 14 und 15, bei dem die Abscheidevorrichtung einen Elektrofilter und/oder einen mechanischen Filter umfasst.

17. Verfahren zur Reinigung eines Prozessgases einer Reflow-Lötanlage nach einem der Ansprüche 10 bis 16, bei dem die Füllkörper ein Metall, ein Glas oder ein keramisches Material umfassen.

## Claims

1. Reflow soldering system comprising a purification device for a contaminated process gas, comprising:
a receptacle containing at least one bed of packing;
a gas feed which is designed to feed the process gas to the receptacle from above and to pass it through the moistened bed of packing;
a gas outlet which is designed to discharge the process gas from the receptacle after flowing through the at least one bed of packing;
an arrangement for feeding a liquid fluid from above onto the bed of packing; and
a cooling device which comprises a casing of the receptacle suitable for the through-flow of a coolant or a suitable cooler in the interior of the receptacle.

2. Reflow soldering system comprising a purification device for a contaminated process gas according to claim 1, which additionally comprises a column plate on which the at least one bed of packing is located.

3. Reflow soldering system comprising a purification device for a flux-contaminated process gas according to claim 1, in which the arrangement for feeding the fluid comprises at least one spray nozzle and/or at least one drop dispenser.

4. Reflow soldering system comprising a purification device for a contaminated process gas according to one of claims 1 and 3, which additionally comprises a catchment receptacle for the fluid.

5. Reflow soldering system comprising a purification device for a contaminated process gas according to one of claims 1 to 4, in which the at least one bed of packing takes up at least half of the volume of the receptacle.

6. Reflow soldering system comprising a purification device for a contaminated process gas according to one of the preceding claims, which additionally comprises a separation device.

7. Reflow soldering system comprising a purification device for a contaminated process gas according to claim 6, in which the separation device comprises
a cyclone type receptacle with a casing suitable for the through-flow of a coolant;
a gas inlet, which is designed to introduce the process gas tangentially to a circumference of the cyclone type receptacle at an upper end of the cyclone type receptacle; and
an essentially vertical gas outlet which is arranged at the upper end of the cyclone type receptacle in its center.

8. Reflow soldering system comprising a purification device for a contaminated process gas according to claim 6 or 7, in which the separation device comprises an electrostatic filter and/or a mechanical filter.

9. Reflow soldering system comprising a purification device for a contaminated process gas according to claim 1, in which the packing, which is moistened from above by a liquid fluid and through which passes the flow of a process gas fed from above, comprises a metal, glass or a ceramic material.

10. Method for the purification of a process gas of a reflow soldering system, in which:
a liquid fluid is brought via an arrangement onto at least one bed of packing in a receptacle, whereby the packing is moistened with the fluid;
a process gas fed from above is passed through at least one moistened bed of packing, whereby the process gas is brought into contact with the liquid fluid, and
a suitable casing of the receptacle or a suitable cooler in the interior of the receptacle is flown through by coolant, and the at least one bed of packing is cooled.

11. Method for the purification of a process gas of a reflow soldering system according to claim 10, in which the process gas, after flowing through the volume filled with the fluid, is passed through a column plate on which the least one bed of packing is located.

12. Method for the purification of a process gas of a reflow soldering system according to claim 10, wherein the at least one bed of packing is moistened with the fluid by the fluid being sprayed or dripped onto the at least one bed of packing.

13. Method for the purification of a process gas of a reflow soldering system according to one of claims 10 to 12, in which the fluid is additionally cooled.

14. Method for the purification of a process gas of a reflow soldering system according to one of claims 10 to 13, in which the process gas after having been passed through the at least one bed of packing is passed into a separation device.

15. Method for the purification of a process gas of a reflow soldering system according to claim 14, in which the separation device comprises a cooled cyclone type receptacle, the process gas is passed into the cyclone type receptacle tangentially to a circumference of the cyclone type receptacle at an upper end of the cyclone type receptacle and the process gas is passed out of the cyclone type receptacle at the upper end in the center.

16. Method for the purification of a process gas of a reflow soldering system according to one of claims 14 and 15, in which the separation device comprises an electrostatic filter and/or a mechanical filter.

17. Method for the purification of a process gas of a reflow soldering system according to one of claims 10 to 16, in which the packing comprises a metal, a glass or a ceramic material.

## Revendications

1. Installation de brasage par refusion avec un dispositif d'épuration destiné à un gaz de processus ayant été pollué, comprenant :
un réservoir qui renferme au moins une charge de vrac de corps de remplissage ;
une amenée de gaz, qui est conçue pour amener le gaz de processus, par le haut, dans le réservoir et le faire s'écouler à travers la charge de vrac de corps de remplissage humidifiée ;
une sortie de gaz, qui est configurée pour évacuer du réservoir le gaz de processus après son écoulement à travers ladite au moins une charge de vrac de corps de remplissage ;
un dispositif pour l'amenée d'un fluide liquide par le haut sur la charge de vrac de corps de remplissage, et
un dispositif de refroidissement, qui comprend une enveloppe du réservoir, adaptée à être parcourue par l'écoulement d'un fluide de refroidissement, ou bien un refroidisseur adapté, à l'intérieur du réservoir.

2. Installation de brasage par refusion avec un dispositif d'épuration destiné à un gaz de processus ayant été pollué, selon la revendication 1, qui comprend, en supplément, un fond de colonne sur lequel se trouve au moins une charge de vrac de corps de remplissage.

3. Installation de brasage par refusion avec un dispositif d'épuration destiné à un gaz de processus ayant été pollué par du flux de brasage, selon la revendication 1, dans laquelle le dispositif pour l'amenée du fluide comprend au moins une buse de pulvérisation et/ou au moins un distributeur goutte à goutte.

4. Installation de brasage par refusion avec un dispositif d'épuration destiné à un gaz de processus ayant été pollué, selon l'une des revendications 1 et 3, qui comprend, en supplément, un réservoir de collecte pour le fluide.

5. Installation de brasage par refusion avec un dispositif d'épuration destiné à un gaz de processus ayant été pollué, selon l'une des revendications 1 à 4, dans laquelle ladite au moins une charge de vrac de corps de remplissage occupe au moins la moitié d'un volume d'espace intérieur du réservoir.

6. Installation de brasage par refusion avec un dispositif d'épuration destiné à un gaz de processus ayant été pollué, selon l'une des revendications précédentes, qui comprend, en supplément, un dispositif séparateur.

7. Installation de brasage par refusion avec un dispositif d'épuration destiné à un gaz de processus ayant été pollué, selon la revendication 6, dans laquelle le dispositif séparateur comprend :
un réservoir du type cyclone avec une enveloppe adaptée à être parcourue par l'écoulement d'un fluide de refroidissement ;
une entrée de gaz, qui est configurée pour introduire le gaz de processus tangentiellement à une périphérie du réservoir du type cyclone, à une extrémité supérieure du réservoir du type cyclone ; et
une sortie de gaz sensiblement verticale, à l'extrémité supérieure du réservoir du type cyclone, en son milieu.

8. Installation de brasage par refusion avec un dispositif d'épuration destiné à un gaz de processus ayant été pollué, selon la revendication 6 ou la revendication 7, dans laquelle le dispositif séparateur comprend un filtre électrique et/ou un filtre mécanique.

9. Installation de brasage par refusion avec un dispositif d'épuration destiné à un gaz de processus ayant été pollué, selon la revendication 1, dans laquelle les corps de remplissage humidifiés par le haut par un fluide liquide et parcourus par l'écoulement d'un gaz de processus amené par le haut, comportent un métal, un verre ou un matériau céramique.

10. Procédé d'épuration d'un gaz de processus d'une installation de brasage par refusion, d'après lequel :
un fluide liquide est amené, par l'intermédiaire d'un dispositif, sur au moins une charge de vrac de corps de remplissage dans un réservoir, en produisant l'humidification des corps de remplissage avec le fluide ;
un gaz de processus amené par le haut est envoyé à travers au moins une charge de vrac de corps de remplissage humidifiée, le gaz de processus étant ainsi amené en contact avec le fluide liquide, et
une enveloppe adaptée du réservoir ou un refroidisseur adapté à l'intérieur du réservoir, est parcouru par un écoulement de fluide de refroidissement, et ladite au moins une charge de vrac de corps de remplissage est refroidie.

11. Procédé d'épuration d'un gaz de processus d'une installation de brasage par refusion, selon la revendication 10, d'après lequel le gaz de processus, après s'être écoulé au travers du volume rempli de fluide, et envoyé à travers un fond de colonne, sur lequel se trouve ladite au moins une charge de vrac de corps de remplissage.

12. Procédé d'épuration d'un gaz de processus d'une installation de brasage par refusion, selon la revendication 10, d'après lequel ladite au moins une charge de vrac de corps de remplissage est humidifiée avec le fluide, grâce au fait que le fluide est pulvérisé ou égoutté sur ladite au moins une charge de vrac de corps de remplissage.

13. Procédé d'épuration d'un gaz de processus d'une installation de brasage par refusion, selon l'une des revendications 10 à 12, d'après lequel le fluide est en plus refroidi.

14. Procédé d'épuration d'un gaz de processus d'une installation de brasage par refusion, selon l'une des revendications 10 à 13, d'après lequel le gaz de processus, après avoir été envoyé au travers de ladite au moins une charge de vrac de corps de remplissage, est envoyé dans un dispositif séparateur.

15. Procédé d'épuration d'un gaz de processus d'une installation de brasage par refusion, selon la revendication 14, d'après lequel le dispositif séparateur comprend un réservoir du type cyclone refroidi, le gaz de processus est envoyé dans le réservoir du type cyclone, tangentiellement à une périphérie de celui-ci, à une extrémité supérieure du réservoir du type cyclone, et le gaz de processus est évacué à l'extrémité supérieure du réservoir de type cyclone, en son milieu.

16. Procédé d'épuration d'un gaz de processus d'une installation de brasage par refusion, selon l'une des revendications 14 et 15, d'après lequel le dispositif séparateur comprend un filtre électrique et/ou un filtre mécanique.

17. Procédé d'épuration d'un gaz de processus d'une installation de brasage par refusion, selon l'une des revendications 10 à 16, d'après lequel les corps de remplissage comportent un métal, un verre ou un matériau céramique.
